# EUROPEAN PATENT APPLICATION

(11) **EP 2 797 292 A1**
(43) Date of publication of application: **29.10.2014**
(21) Application number: 13382153.8
(22) Date of filing: 25.04.2013
(51) Int. Cl.: H04L 29/08

(54) **Method and device for virtualization of terminal devices of a wireless network**

(71) Applicant: Telefónica, S.A., 28013 Madrid (ES)
(72) Inventor: Lorca Hernando, Javier, 28013 MADRID (ES)
(74) Representative: Carpintero Lopez, Francisco

(57) **Abstract**

A method and device for virtualization of terminal devices in mobile communications networks. The present invention introduces the idea of a completely virtualized terminal device. Any interaction through the user interface can trigger appropriate actions, such as connecting to a peer device, but the behaviour of the terminal device would be fully controlled by an operator's device virtualization node which would perform the appropriate actions with the peer device on behalf of the terminal device, irrespective of the type of connection. The complete functionality of the device is virtualized making it independent of the actual device capabilities so the mobile users can get rid of any actual constraints imposed by the terminal device.

## Description

### BACKGROUND OF THE INVENTION

### Technical field

The present invention relates to the field of virtualization technology and more specifically to a method and device for virtualization of terminal devices in mobile communications networks.

### Description of related art

Virtualization techniques involve the creation of a "virtual" version of a device, element or network. Hardware (or platform) virtualization involves the instantiation of a virtual machine that interacts with the user in the same way that a real hardware or platform would do. Network virtualization involves the creation of network entities that are independent from the real network elements comprising the physical resources, in a transparent way for the user. Software, desktop or application virtualization gives rise to so-called cloud services, in which internet-based solutions give the user the appearance of desktop applications running locally at the user's device. In this case a wired or wireless connectivity brings the feel of local applications and services to the user, without having to be physically present in the device.

Application virtualization usually involves a host client, running in the device, and a cloud server (or set of cloud servers) delivering virtualized services to the user. Typical cloud applications require the installation of one or more cloud clients (which can be part of the device's operating system). The device should therefore support this kind of services through the operating system. Services virtualization can also be applied to wireless mobile scenarios, bringing access to virtually unlimited network services to the mobile user.

Virtualized applications require suitable frameworks running locally in the device. Therefore present virtualization technologies cannot get rid of the local framework running in the device for virtualized services to properly operate.

Mobile cloud platforms can provide virtualized resources to the mobile terminal device, with suitable mobile cloud platform and service layers (as disclosed for example in patent applications, US2010/0248698 or US2011 /0093567). Each of the mobile terminal devices includes a mobile cloud platform that supports this mode of operation. The approaches proposed in said applications have the above mentioned drawback of always requiring a suitable local client for interaction with the different cloud servers.

Other approaches include the so-called Open Wireless Architecture, where various wireless standards are merged in a common system platform from different vendors, and a common communication terminal is devised for both wired and wireless access (as disclosed for example in patent application US2009/0075654). It has the drawback of requiring a highly complex terminal device wherein the paradigm of mobile communications is to focus on a multi-standard device, rather than relying on the network for virtualization of the mobile services.

The proposal in patent application WO2010/151858 describes a framework for mobile device virtualization based on Virtualization Software that interacts between the virtual machines and the underlying hardware, based on device driver software that communicates with the physical device. Said solution requires fully-functional local operating system and device applications for execution of the virtualization software (by establishing a user-controlled mapping between virtualized resources and real hardware); virtualization capabilities are thus locally controlled by the end user with no chance for the operator to manage them. Finally, the proposal in patent application US2009/0036111 describes a remote management system where a virtual instance mobile device is maintained for each physical mobile device to be managed. Said proposal only tries to replicate the behavior of real devices in the network, and again requires pre-existence of device operating systems and applications in order to remotely manage them.

All the above presented cases share the common characteristic of relying on the end-user device to locally run the applications over a suitable operating system, on top of which virtualization software may locally emulate one or more virtual machines or with the aid of the network.

On the other hand, virtualization servers usually reside outside the operator's mobile network and deliver access to over-the-top (OTT) applications to the subscribers. OTT multimedia applications, such as voice or video over Internet Protocol (IP), are outside the operator's control and therefore do not benefit from enhanced quality of service attributes which are characteristic of wireless networks. The additional delay sometimes incurred between the core network's nodes and the OTT servers may also impair user experience. Moreover, users registered in the same mobile network are forced to establish long data connections to the corresponding OTT server(s), and this may impact the net Transport Control Protocol (TCP) throughput due to high bandwidth-delay product values.

Hence, alternative solutions should be studied for a more efficient delivery of virtualized services in wireless mobile networks. The embodiments of the invention stated below will overcome at least some of these drawbacks.

### Summary

The problems found in prior art techniques are generally solved or circumvented, and technical advantages are generally achieved, by the disclosed embodiments which provide a method and device for terminal devices virtualization.

The present invention introduces the idea of network-based device virtualization, by which mobile users (also called subscribers) can get rid of any actual constraints imposed by the terminal device. Instead of keeping the client-server model of cloud-based virtualized services, in which the subscriber (user) device interacts with one or several virtualization servers that deliver the appropriate applications, the complete functionality of the device can be virtualized at the network side thus making it independent of the actual device capabilities.

In a first aspect a method is provided for virtualization of a terminal device of a subscriber of a mobile communications operator, the method comprising:
- The terminal device connecting to the operator's mobile communications network via a radio access interface to request communication services with peer communication devices;
wherein the method further comprises the following steps:
- A network node of the operator's mobile communications network, hereinafter referred to as Device Virtualization Server, establishing a connection with the terminal device when said terminal device is switched on;
- The Device Virtualization Server establishing a first communication session with the terminal device using said previously established connection;
- Said Device Virtualization Server detecting all the communication service requests of the terminal device through said first communication session, and when said Device Virtualization Server detects a communication service request of the terminal device, said Device Virtualization Server extracting from the terminal device using said first communication session, information about the requested communication service and the peer communication device with which said communication service is requested to be established;
- Said Device Virtualization Server establishing a communication path with the peer communication device and establishing a second communication session with the peer communication device using said communication path, where the communication protocols and communication procedures used in said second communication session will depend on the type of communication service requested and the type of peer communication device;
- Said Device Virtualization Server establishing a virtual communication session between the terminal device and the peer communication device using the first and second communications sessions.

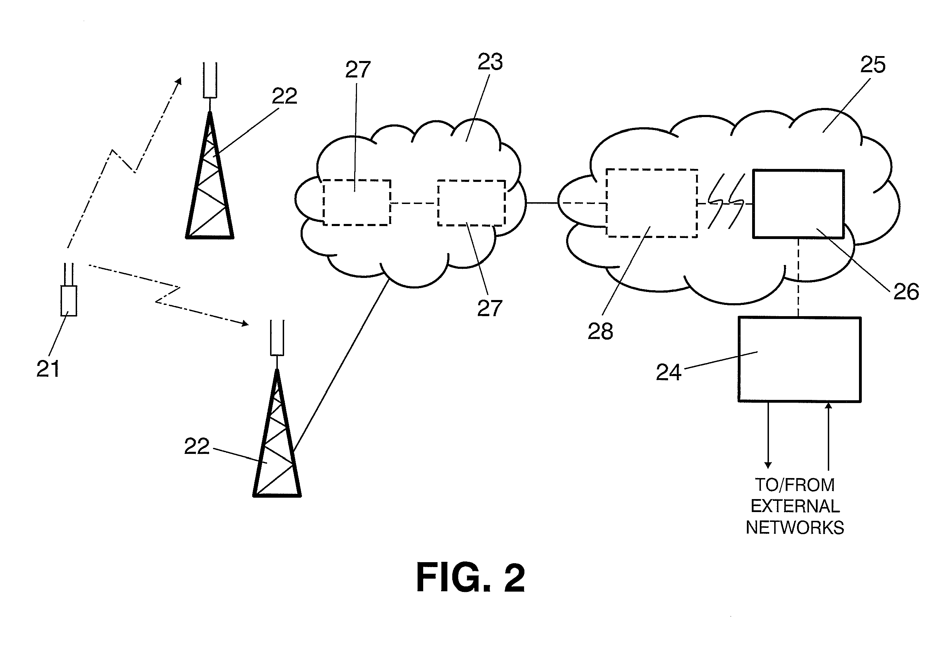

Said Device Virtualization Server may be connected to a core network gateway node of the operator's mobile communications network located at the interface between the core network of the operator mobile communications network and any other external network. Actually said Device Virtualization server may be located between said core network gateway and any other external network (as shown for example in figure 2).

The step of establishing a second communication session with the peer communication device may comprise the steps of:
Said Device Virtualization Server notifying the peer communication device about the communication service request of the terminal device, and
If the peer communication device receives and accepts the communication service request, said Device Virtualization Server establishing a second communication session with the peer communication device.

And the step of said Device Virtualization Server establishing a virtual communication session between the terminal device and the peer communication device using the first and second communication sessions may comprise the following steps:
Said Device Virtualization Server receiving via the first communication session, data from the terminal device for the peer communication device in a first communication format according to the communication protocols used in the first communication session, translating said data to a second communication format according to the communication protocols used in the second communication session and transmitting said data in the second format to the peer communication device via the second communication session. The translation of the data to the second format may comprise the use of codecs.
Said Device Virtualization Server receiving via the second communication session, data from the peer communication device for the terminal device in the second communication format, translating said data to the first communication format and transmitting said data in the first format to the terminal device, via the first communication session.

The peer communication device can be one of the following: a terminal device belonging to the same operator communication network as the first terminal device, a terminal device belonging to another operator communication network, an external server providing the communication service, a terminal device connected to the Circuit switched domain of a mobile communication network, or a fixed terminal device connected to a Public Switched Telephone network or to an integrated Services Digital Network and the communication service may be a packet switched multimedia session, a packet switched data or voice communication or a circuit switched voice or multimedia communication or any other type of communication service.

In an embodiment, said Device Virtualization Server is the termination point for any connection or communication session to/from all the subscriber's terminal devices of the operator mobile communications network

In an embodiment, the terminal device presents information to the subscriber according to the data received in the first communication session, and exchanges data with said Device Virtualization Server through the first communication session for interaction with the subscriber.

In an embodiment, any application needed to access to the requested communication service is located in the Device Virtualization Server.

The Device Virtualization Server may establish the communication path with the peer communication device through a connection with a second Device Virtualization Server, in order to establish the virtual communication session between the terminal device and the peer communication device connected to the second Device Virtualization Server.

The second communication session may be one of the following: a Voice over IP communication, a circuit-switched communication through a Mobile Switching Centre, a packet-switched data communication, or a packet switched multimedia communication trough an IP multimedia subsystem.

The communications path between said Device Virtualization Server and the peer communications device may be made through an external network to which the Device Virtualization Server node is connected. The Device Virtualization server may be directly connected to external communications networks.

In an embodiment, the communication protocols and communication procedures used in the first communication session between the terminal device and said Device Virtualization Server are always the same, irrespective of the communication service requested.

In an embodiment, the subscriber's terminal device is permanently connected with said Device Virtualization Server as long as the terminal device is powered on and under sufficient coverage and the connection between the terminal device and said Device Virtualization Server may have the highest priority as supported by the radio access and core networks of the mobile communications network.

In another aspect, a network node is provided, referred to as Device Virtualization Server, for virtualization of terminal devices of subscribers of a mobile communications operator, wherein said network node comprises:
- A communications module for establishing connections with all the terminal devices of the mobile communications operator (or part of the terminal devices if there is a pool of Devices Virtualization Servers in the operator) when said terminal devices are switched on; for establishing and maintaining independent communications sessions with each terminal device using said previously established connections and for receiving subscriber information from all the subscribers of the mobile communications operator through the established communication sessions.
- Means for, when the network node detects a communication service request from any terminal device, extracting information from the communication service request about the requested communication service and the peer communication device with which said communication service is requested to be established, using said established communication session.
- Means for establishing a communication path with the peer communication device and for establishing a second communication session with the peer communication device using said communication path, where the network node will use in said second communication session the necessary protocols and procedures depending on the type of communication service requested and the type of peer communication device.
- Means for establishing and maintaining a virtual connection between the terminal device and the peer communication device using the communication session established with the terminal device and the second communication session.

According to another aspect of the invention, a computer program product is provided, comprising computer-executable instructions for performing any of the method previously disclosed, when the program is run on a computer and a digital data storage medium is also provided encoding a machine-executable program with instructions to perform any of the methods disclosed.

Consequently, according to the invention, a method, system, devices and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a schematic block diagram of a scenario where an Operator's Device Virtualization Server according to an embodiment of the present invention is used.
Figure 2 shows a schematic block diagram of a wireless mobile network architecture according to an embodiment of the present invention.
Figure 3 shows a diagram of the basic establishment of a communication service in the scenario shown in figure 2 according to an embodiment of the present invention.
Figure 4 shows a schematic block diagram disclosing the execution and maintenance of remote applications and services according to a proposed embodiment of the present invention.
Figure 5a shows a schematic block diagram of a first communications scenario where a terminal device wants so establish a session with another terminal device connected to the same DVS according to a proposed embodiment of the present invention. Figure 5b shows schematically the sequence of signaling and data messages in said communications scenario.
Figure 6 shows schematically the sequence of signaling and data messages in a communications scenario according to prior art embodiments.
Figure 7a shows a schematic block diagram of a second communications scenario where a user device wants to establish a data/multimedia session with another user device, both devices being controlled by different DVS nodes (belonging to different operators). Figure 7b shows schematically the sequence of signaling messages in said communications scenario according to proposed embodiment of the present invention.
Figure 8a shows a schematic block diagram of a third communications scenario where a user device wants to establish a PS data connection with an external server accessible through the Internet, according to a proposed embodiment of the present invention. Figure 8b shows schematically the sequence of signaling and data messages in said communications scenario.
Figure 9a shows a schematic block diagram of a fourth communications scenario where a user device wants to establish a voice connection with a legacy user equipment connected to the CS domain of the operator's core network (or the CS domain of another operator's core network), according to a proposed embodiment of the present invention. Figure 9b shows schematically the sequence of signaling and data messages in said communications scenario.
Figure 10a shows a schematic block diagram of a fifth communications scenario where a user device wants to establish a voice connection with an external fixed device from a Public Switched Telephone Network (PSTN) or Integrated Services Digital Network (ISDN), according to a proposed embodiment of the present invention. Figure 10b shows schematically the sequence of signaling and data messages in said communications scenario.

Throughout the figures like reference numerals refer to like elements.

### DESCRIPTION OF EMBODIMENTS

The present invention may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The present invention introduces the idea of a completely virtualized terminal device where, contrary to known cloud-based proposals, the whole functionality and behaviour of the device resides in the network and not only the subscriber's private information.

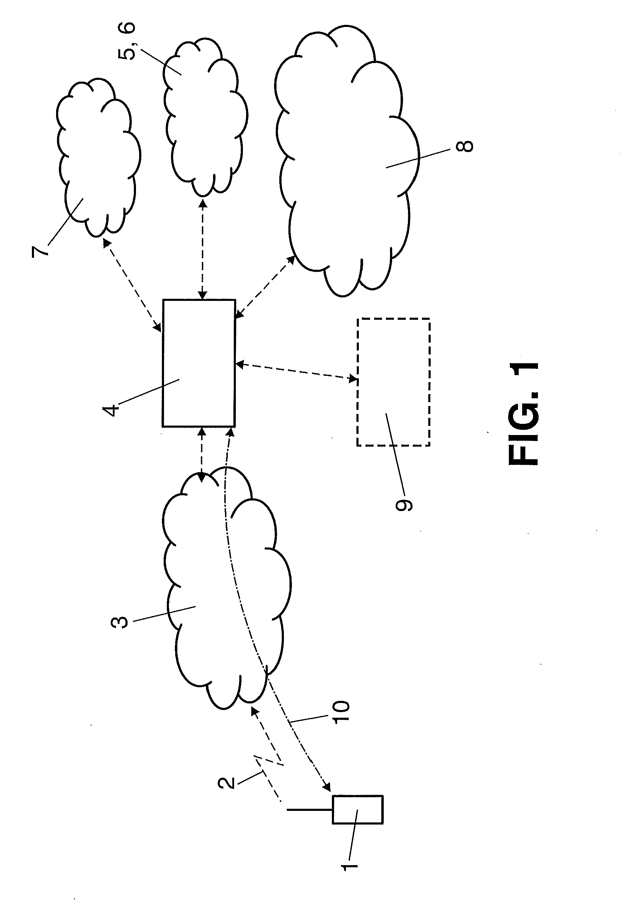

Figure 1 depicts the scenario where an Operator's Device Virtualization Server according to an embodiment of the present invention is used. In a mobile wireless scenario, the subscriber's physical device (also called user or subscriber equipment, mobile device or terminal device) is connected via the air interface (2) to the operator's Public Land Mobile Network (3), PLMN (through a radio access network and a core network). The terminal device (1) can be a computer, a laptop, a note book, a mobile phone, a smart phone, a set top box, a TV with internet capabilities or any other type of user equipment which is able to access to a mobile communications network. In other words, the terminal device should be capable of one or more connections with the operator's network through one or more radio access technologies (it should comprise as well a suitable hardware for interaction with the subscriber through a set of sensors and hardware interfaces).

In prior art network architectures the operator's PLMN is directly connected to a number of external networks, such as a Public Switched Telephony Network, PSTN, (5) an Integrated Services Digital Network, ISDN (6), a PLMN from another operator (7), or the Internet (8), among others. Contrary to prior art architectures, this invention proposes the introduction of a new network node denoted as Device Virtualization Server, DVS, (4), under complete control of the operator, which is in turn directly connected to a number of external networks or a DVS of another operator (9). The Device Virtualization Server is a node located inside the operator's mobile network in charge of controlling all the customers' devices (or part of tehm if there is a pool of Device Virtualization Servers in the operator). Its role is twofold: it delivers virtualized device sessions to the subscribers in the mobile network (10), and centralizes all the connectivity tasks between the mobile subscribers and any other entities in the network.

Hence, the Device Virtualization Server (DVS) may be defined as a network node, connected to the core network gateway and controlled by the operator, in charge of maintaining and delivering the device virtualization sessions, establishing suitable connections with the peer entities in a transparent way, and delivering session information to the terminal devices. The Virtualized Device Session may be defined as a virtual session delivered by the DVS node to the subscribers' terminal devices and controlled by the operator, comprising the whole device functionality, capabilities and applications which are remotely executed at said Device Virtualization Server as defined by the network operator. The behaviour and functionalities of the virtualized devices are completely managed by the network through the Device Virtualization Server.

In other words, the Device Virtualization Server proposed in the present invention, maintains suitable and independent communications sessions (virtualized device sessions) for each of the mobile users, comprising the whole set of functionalities, applications and services which are remotely executed at said Device Virtualization Server and define the device behavior as specified by the network operator;

The advantage of the DVS node is the ability to offer completely virtualized device sessions to the mobile network subscribers (users), irrespective of the actual terminal subscribers' capabilities and under control of the operator. The connectivity tasks are also managed in a unified way so that the subscribers need not be aware of the actual platforms and services used, and only appropriate delivery of the multimedia contents and subscriber interactions are required to/from the physical device.

The DVS node delivers virtualized device sessions to the subscribers and performs all the necessary connections with the peer entities through the corresponding external network, according to the communication services actually in use. The subscriber thus gets the impression of having a much more capable device with the functionalities offered by the virtualized device session, and with the advantages of increased computational capabilities as well as enhanced and unified communication services. The subscriber equipment will be connected with the DVS through the operator's radio access and core network and it will send to the DVS subscriber information and sensors information. Sensors denote any kind of electrical transducer aimed at converting one form of energy into electrical information, examples of which are microphones, cameras, tactile displays, keys gyroscopes or accelerometers, among others.

The physical subscriber device needs only to comprise a thin execution environment, which basically controls the hardware and sends/receives suitable events to/from the DVS node. Apart from a reduced set of local features (implementing some basic functionalities when the device is out of coverage), the whole operating system's features are under control of the network, and the operator can manage what applications are in use by each mobile terminal in such a way that the subscribers need not be aware of them. Additionally, all the device behaviour can be controlled at the network side and configured by the subscriber through any suitable mechanism, such as subscription type, remote configuration or any other possibility. Contrary to other virtualization services, the DVS node is not located somewhere in the Internet, but right at the boundary between the operator's core network nodes (e.g. the GGSN for 2G/3G, or the PDN-GW for LTE) and any other external network. The DVS is permanently connected to the mobile subscriber with the highest priority as supported by the radio access network architecture. In this way the delay is minimized, and uncertainties associated to Internet congestion are avoided for delivery of the virtualized device session's traffic.

The DVS node will gather a portfolio of third-party applications previously agreed between the service providers and the operator. Installation of a given application at the DVS node brings the possibility of using it on the virtualized devices corresponding to all the operator's subscribers, including also roaming subscribers. In addition to applications, the DVS can also cover all aspects of a subscriber's terminal device such as voice and video calls, agenda, personal subscriber data, access to Virtual Private Network (VPN), electronic mail, and others.

The mobile device can thus be reduced to a tiny operating system (OS) in charge of controlling the connectivity with the network, the set of hardware resources according to the device's capabilities, and any other local functions which may be desirable in case that the device is out of coverage. The local OS may also have the ability to run some applications locally, upon demand from the subscriber, e.g. for the cases where fast subscriber interaction is required. The basic connectivity functions will include some agreed communication protocol with the DVS node aimed at executing basic events to be performed locally (such as display events, graphics, sound management and interaction with the device's screen and sensors). The proposed architecture allows for a number of use cases, some of them will be thoroughly described below. In several embodiments, the proposed invention enables virtualization of data and multimedia services in such a way that complete OTT services can be seamlessly provided to the subscriber upon agreement with the operator, removing the need to install the same applications at each of the subscriber devices. Moreover, part of the revenues from third-party applications could be brought to the operator by giving their customers the ability to access them. Additionally, the DVS node can offer enhanced integrated multimedia services by hiding the complexity of audio, video and data connections to any kind of terminal device (such as a conventional phone, a laptop, an external server or another virtualized device, among others).

A different relationship between the subscriber's terminal device and the network may be established based on the following proposed changes over traditional wireless networks:
1. The terminal device owned by the subscriber represents a much less "intelligent" device in the present invention than in traditional wireless networks. As will be shown below, the terminal device comprises three parts: a local tiny operating system, a communications module, and any required hardware element (according to the device capabilities). The operating system contains a local boot system as well as basic functionalities for the cases when the device is out of coverage. The communications module is in charge of interpreting the events received from the network, which conform the whole functionality of the device. Finally, the hardware of the device can contain all kinds of sensors and interfaces as usually present in mobile devices, such as a tactile screen, accelerometers, gyroscopes, humidity sensors, and so on. Information from/to such interfaces will also be exchanged with the network by the connectivity module.
2. While the radio access network remains unchanged, an additional network node is introduced (e.g. right at the interface between the core network (CN) gateway, such as the GGSN, Gateway GPRS support node, for 3G, or the PDN-GW, packet data network gateway, for LTE) and any other external network, namely the Device Virtualization Server (DVS). The DVS node is in charge of controlling the virtualized devices present in the network, or in a geographical region (if there is a pool of DVS nodes controlling each one a number of devices). The DVS acts as an application server persistently connected to the subscriber device with the highest priority, maintaining the device sessions and performing the necessary connections to the peer entities.

It is to note that two different concepts can be referred to in this invention: the "terminal device" (used in the present specification as synonym of physical device, subscriber's equipment or mobile device) representing the actual device that the subscriber owns and makes use of; and the "virtualized device", which represents the logical entity created by the DVS node and presented to the subscriber to give the illusion of an enhanced device with much greater capabilities than the physical device.

The proposed invention allows for unlimited access to different services by the subscribers without the need to change their physical devices. Similarly it allows operators to decide which services and applications they want to deliver to their customers, and to offer them in a much more efficient way than in traditional wireless networks (where quality of experience is under control of third-party applications unaware of the actual operator's infrastructure). Additionally, it enables seamless multimedia services which can be served in a unified way irrespective of the actual technology involved (circuit-switched, packet-switched, media streaming, and so on). Finally, it gives operators the ability to apply unified charging policies for their complete portfolio of services, by performing suitable agreements with the application (service) providers prior to delivering them. Application providers will also benefit from this invention because, once a service is agreed to be provided, its scope automatically spreads over the whole set of customers without the need to download or install any single application on their devices. This avoids compatibility issues with legacy devices or outdated operating systems.

### Mobile network architecture

Figure 2 depicts a suitable wireless mobile architecture for application of the proposed invention. The radio access network (23), RAN, may remain unchanged with respect to traditional mobile networks (it will be composed of different Radio Access Network Nodes 27). The terminal devices (21) will access the RAN via the mobile network's base stations (22). The new network node denoted as Device Virtualization Server (24) is connected to the Core network (25) (it will be composed of different Core Network Nodes 28) and more specifically with the Core Network Gateway node (26). The DVS remains within the operator's control, but acts as an application server whose traffic can be given the highest priority in both core and radio access parts.

As an application server, the DVS represents the anchor point where the different subscribers' terminal devices (21) are permanently connected. It delivers appropriate virtualized contents to the devices by specifying their complete behaviour and functionalities, both from application and connectivity points of view. In case that the subscriber wants to establish any kind of connection with another device, the DVS node will perform the necessary actions:
o Establish the real connection with the peer entity in a transparent way for the device;
o Present to the subscriber the communication session in an attractive way according to the type of session;
o Act as an interface for subscriber interaction with the peer entity.

The DVS node represents the termination point for any connection to/from each of the subscribers' terminal devices. The additional connection from the DVS to the terminal device presents only suitable information to the subscriber in the form of icons, windows, animations, or any other means to interact with the subscriber, and represents the vehicle for subscriber interaction towards the network. The proposed architecture allows for managing the device behaviour, its communication services and capabilities, its applications and all the relevant personal data by the network. Applications will therefore run remotely according to the operator's policies and agreements with third-party application vendors, and the quality of experience may be based upon the subscribers' subscriptions instead of the physical device. Any upgrades in the functionalities, applications or device behaviour can be applied in a unified manner over the whole set of operator's subscribers. An additional advantage of this architecture is the unified management of multimedia services, which can be based upon any particular architecture in a totally transparent way for the subscriber. This is further explained below.

### Device Virtualization Server (DVS)

The proposed DVS node will perform three different roles:
1. Establish a communication path with the peer communications entity (a remote computer, a terminal device, an Internet-based server, or any other computing device remotely accessible), by means of any suitable technology, to offer any kind of communication service to the subscriber. As an example, a voice connection with a peer device can be established through a voice-over-IP (VoIP) OTT application residing in the DVS, a circuit-switched (CS) connection to a mobile terminal through a Mobile Switching Centre (MSC), a packet-switched (PS) connection to a mobile terminal through IP Multimedia Subsystem (IMS), or a packet-based virtual direct connection through the DVS, among other possibilities.
2. Maintain the virtualized device sessions for all the active customers and transmit/receive the necessary information to/from the physical devices (regarding screen operation, data received from sensors and subscriber interaction). Inactive subscribers can also be dealt with through appropriate management of those operations not requiring any interaction from the subscriber, such as the reception of data (as in a virtual remote hard drive), OS updates, fixes for specific applications and device functionalities, or instant messages, among others. The device session will also include any subscriber information such as multimedia archives, personal agenda and any other related data. These data can be eventually downloaded to the physical device (with or without explicit subscriber interaction), which can be useful to alleviate costly network transactions when managing large volumes of data.
3. Execute and maintain those applications and services selected by the operator for each of the customers' sessions. By acting as a host, these applications and services can be eventually executed in a distributed (or cloud) manner according to the operator's architecture. As an example, the DVS may offer social networking services by locally hosting the required applications, or by connecting to a suitable cloud service which offers the relevant services to the DVS in a remote way.

In other words, said Device Virtualization Servers maintain suitable virtualized device sessions for all terminal devices of the mobile network, said virtualized device sessions comprising the whole set of functionalities, applications and services which are remotely executed at said Device Virtualization Server and define the device behaviour as specified by the network operator, and being responsible of all communication tasks with any peer entity (a remote computer, a terminal device, an Internet-based server, or any other computing device remotely accessible) without intervention of the terminal devices.

There may be a pool of Device virtualization servers in an operator, each one may be in charge of the connection with a part of the mobile network operator subscribers.

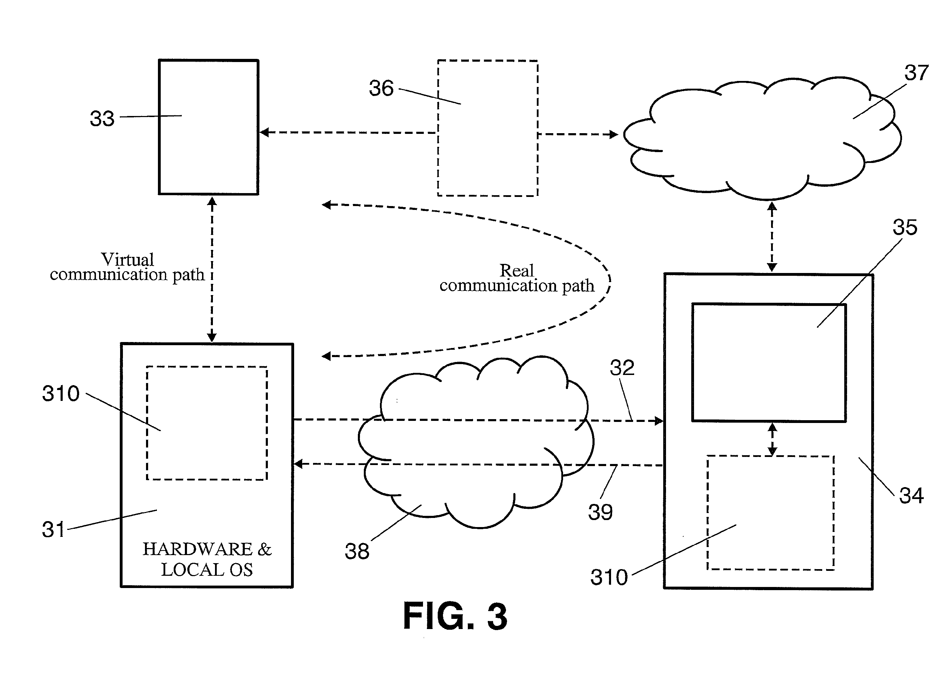

Figure 3 describes the basic establishment of a communication service through the DVS. The subscriber, via its terminal device (31), initiates the communication through a suitable request (32) through the operator's radio and access network (38), such as launching a virtual application in the virtualized device session delivered by the DVS node (34). Upon request of a connection with a peer entity (33), located inside or outside the operator's network, the DVS establishes a communication path by using any suitable platform (such as an OTT application running in the DVS, a CS/PS service offered by the operator's mobile network, an IMS connection, or an Internet connection, among others). The communications with the peer entity (also called peer communications device) will be managed by the communications module of the DVS (35). This communication path may eventually involve additional DVS nodes (36) from another operator and/or a connection with an external network (37). After establishing a connection with the peer entity, the DVS node will deliver the necessary feedback to the subscriber (39) according to the virtualized device session (310), whereby the subscriber gets the impression of having a direct "virtual communication path" with the peer side, instead of the real path involving multiple network nodes.

The concept of a virtualized device session can be disclosed as follows. The DVS node performs the three roles described above (establish a communication path with the peer entity, control the virtualized device session for all the operator subscribers and act as a local host for the virtualized applications), resulting in a set of elements or services, which can be classified in: virtualized server applications, device functionalities and subscriber's files and personal data. Said services are delivered to the subscriber in a transparent way through the operator's wireless network. The local operating system of the terminal device interprets the information received from the DVS and re-creates a suitable device session, thus giving the illusion that said services (applications, device functionalities and subscriber's files and personal data) are running locally in the device, as the "virtualized" counterparts of the corresponding elements in the DVS. In order to do that, the terminal device will perform the roles of: interpreting events from the DVS, give feedback to the DVS about subscriber's interaction and sensors information and constantly keep connection with the DVS. It is to note that the device functionality can be changed or updated dynamically, according to the DVS capability, the subscriber subscription and any operator's policies.

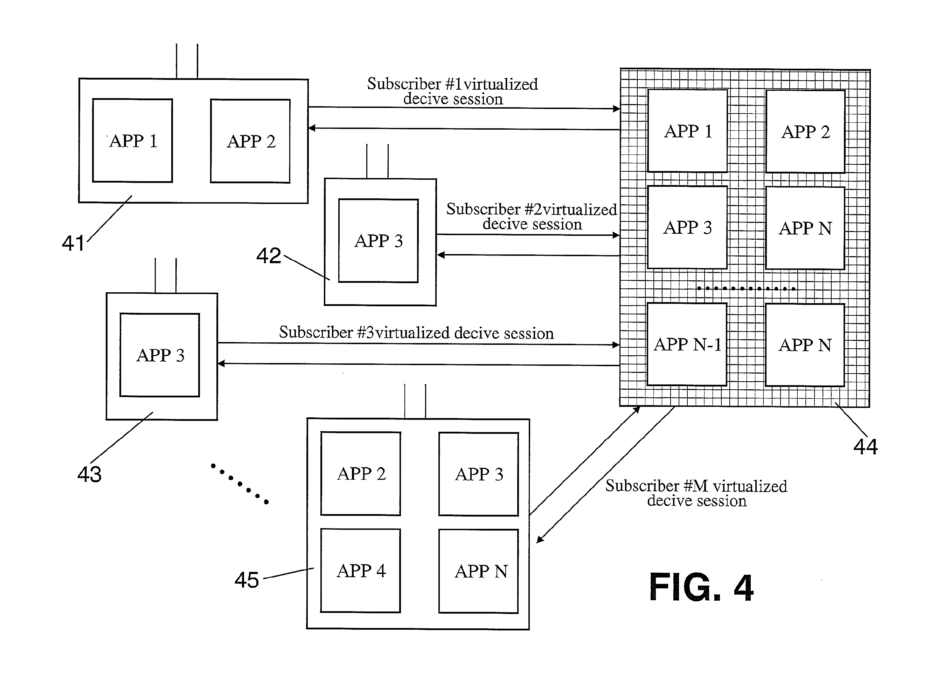

Figure 4 describes the execution and maintenance of remote applications and services. The DVS node (44) can host a number N of applications previously agreed between the operator and third-party application/service providers (which deliver their services in a unified way under control of the operator), so that all subscribers can potentially benefit from them without any installation. A number M of subscribers are connected to the DVS and, depending on their subscriptions, they are allowed to execute a subset of the available remote applications. In the figure, subscriber 1 (41) can run applications 1 and 2; subscribers 2 (42) and 3 (43) can only run application 3; and subscriber M (45) can run applications 2, 3, 4 and N. This model can also be extended to roaming subscribers. It is to note that in figure 4, all the virtualized applications run different instances, so that each pair "application-subscriber" represents a different session and is independently managed by the DVS. Each virtualized application instance contains the necessary internal variables, subscriber interface status, local subscriber information and any other data required for proper differentiation of the subscribers' sessions, even if they are based on the same service provider(s). Application instances of the same service corresponding to different subscribers are independently executed and maintained by the DVS, just as if they were different applications intended for a given user or multiple users.

The DVS node will be connected to the Online Charging Server (OCS), the Offline Charging Server (OFCS) and/or any other charging nodes in the core network for appropriate charging of the communication services. Actual charging policies may be based upon subscription type and the platforms and services running under control of the operator (IMS architecture, OTT applications, CS/PS connections, and so on).

The advantage of keeping the connectivity responsibilities in the DVS is threefold:
1. The device does not need to support any frameworks or applications for establishing data and multimedia connections, as happens in traditional wireless networks where third-party OTT applications are completely out of the operator's control.
2. The session's behaviour is controlled in a centralized way without limitations from the device OS. This allows for constant upgrades and new functionalities for the subscribers without having to change their physical devices.
3. Control of the communication sessions enables the operator to provide the best combination of services to its subscribers in a dynamic way, with a complete control of the services.

On the other hand, maintaining the device sessions demands a very good connectivity from the terminal devices, with very low latencies and high bit rates in both the uplink and downlink of the radio access. Advanced wireless technologies should preferably be considered (such as 3GPP LTE-Advanced, or IEEE 8012.16m, among others), not precluding any other possibility depending on implementation needs. Maintenance of remote applications may eventually require a pool of DVS nodes, in order to cope with high serving loads when the number of subscribers is also high. The device may not be aware of the actual DVS node it is connected to. Similarly the DVS nodes may not physically host the execution of the offered services, but may connect to appropriate cloud servers which deliver them in a transparent way. The device sessions will be persistently active even if the terminal device is switched off (or out of coverage), as the DVS node will keep controlling the execution and maintenance of the device functionality, user information and virtualized applications, only lacking from appropriate subscriber interaction until it is switched on again (or coverage is restored). Device sessions corresponding to terminals which are switched off or out of coverage can therefore be kept in the background by the DVS, hence not losing any data or context information. The DVS can also eventually resume pending data transactions with a peer entity (such as a file transfer or a peer-to-peer download), even if the terminal is switched off or out of coverage, without intervention from the subscriber (who will have immediate access to those data when the terminal is powered on or under coverage again).

### Architecture of the terminal device

Contrary to traditional wireless networks where the mobile terminal is usually provided with advanced processing capabilities, in this invention the terminal device needs only to comprise three functional elements:
o A communications module in charge of interpreting events from the DVS, and also sending events to the DVS, according to the hardware capabilities (events from the tactile screen, local sensors, location information, etc.).
o A tiny local operating system (OS) in charge of performing the initial boot and providing limited processing capabilities especially for the cases where the device is out of coverage.
o Any other required hardware elements (according to the device capabilities) such as for example, memory (volatile and non-volatile), tactile screen, cameras, gyroscopes, accelerometers, sensors (e.g. temperature or humidity sensors), among others. Some of said hardware elements will be in charge of the interaction with the subscriber (subscriber's interface).

These different functional elements exchange messages and information between them. The terminal architecture might comprise any other additional software (SW) elements the terminal manufacturer might wish.

The communications module will be permanently connected to the corresponding DVS node for seamless operation as long as the physical device is powered on and has sufficient radio coverage. After the physical device is powered on, the communications module will automatically set up a persistent connection with the DVS for continuous exchange of virtualized device session information. The connection with the DVS only finishes when the device is switched off or out of coverage, although the virtualized device session can still remain active under control of the DVS as explained before. In this respect, a suitable events protocol may be defined between the device and the DVS node. This protocol would comprise the set of events, data formats and interactions to/from the subscriber that would be present in the system. As an example, events oriented to/from a tactile screen can be conveniently compressed and represented in any suitable digital format. Data from each of the device's sensors will also be sent to the DVS with the minimum achievable latency. Events such as a touch on the screen, interaction with the elements of a window, icon animations, and so on can be predefined and compressed to account for all possible interactions in an efficient way.

The local OS running in the device, on contrary to traditional mobile operating systems, will be extremely tiny in order to provide very basic functionalities such as:
- Suitable power-on and power-off mechanisms for organized management of any local data downloaded to the terminal. Local files or user information previously downloaded by the physical device can be properly managed by the local OS, so that they are stored in non-volatile storage media before the device is powered off and can therefore be accessible when it is powered on again.
- Some processing capabilities for management of local information stored in the device (such as viewing the agenda, accessing personal information or watching videos, among others), especially when the device is out of coverage.
- Real-time control of the communications module, with highest priority over the rest of the tasks. In case the device is temporarily out of coverage, the OS can take advantage of any cached contents that may be locally stored, especially those with a very slow change rate (such as personal agenda or calendar).

Additionally, the tiny OS may also result in a significantly reduced central processing unit (CPU), which represents the core of the device in charge of controlling the hardware elements and running the operating system. As the tiny OS will demand much lower resources from the device, the CPU processing capabilities may be reduced accordingly (depending on implementation needs), and this in turn results in reduced battery consumption. The communications module should have enhanced capabilities in order to handle real-time connections with the DVS with the highest possible throughput and minimum achievable latency, and this extra requirement may benefit from eventual reductions in CPU size and cost.

Having a single connection between the subscriber terminal devices and the DVS nodes, instead of multiple connections with different peer entities, introduces additional advantages over traditional schemes:
○ As the terminal device's peer entity is always the DVS node, uncertainties related to Internet congestion will likely disappear, and delay will only depend on the radio access and core networks (both of which are under the operator's control).
○ The throughput of TCP connections can be enhanced by properly dimensioning the receive window size at the client entities, according to the maximum delay. TCP throughput heavily depends on the bandwidth-delay product (BxD). The TCP receive window size should be dimensioned according to the BxD, and this in turn requires knowledge of the maximum expected delay. In traditional wireless networks (where data traverse multiple wired and wireless interfaces) delay is usually unknown, and this results in suboptimal window sizes and lower throughput values. The proposed architecture allows optimizing the TCP receive window size according to the characteristics of the operator's network, which can be much more accurately determined than any other external network.
○ Real traffic between the DVS nodes and the peer entities (containing subscriber data, not virtualized sessions' data) will not traverse the radio access network unless legacy subscriber devices are to be reached, and therefore will not be subject to radio interface constraints. This in turn avoids the mixture of wireless and wired connections which generally degrades performance in traditional wireless networks. By separating wired real traffic from wireless session's data, both domains can be separately optimized and quality of experience can be greatly enhanced.
○ The virtualized sessions will represent a much more homogeneous traffic load to the radio access network than in the case of having multiple connections. The scheduler running in the base stations performs radio resource management among the active subscribers, and this task will become much easier if uncertainties from Internet sources are avoided.

The local OS running in the subscriber device may request the network to download any piece of information for easy local access. As an example, personal video files frequently accessed by the subscriber may be locally downloaded to alleviate the network from repeatedly showing their contents, therefore reducing the bandwidth required for the virtualized session's traffic.

In other words, said terminal device must comprise suitable hardware elements such as tactile screen, camera, sensors, and any other elements acting as interfaces to the subscriber, a communications module for keeping a persistent connectivity with said Device Virtualization Server, and a tiny operating system that controls the hardware resources, said operating system being under full control of said Device Virtualization Server and limited to presentation of said virtualized device sessions to the subscriber as well as interaction with the subscriber through said device hardware elements.

### Exemplary communications scenarios.

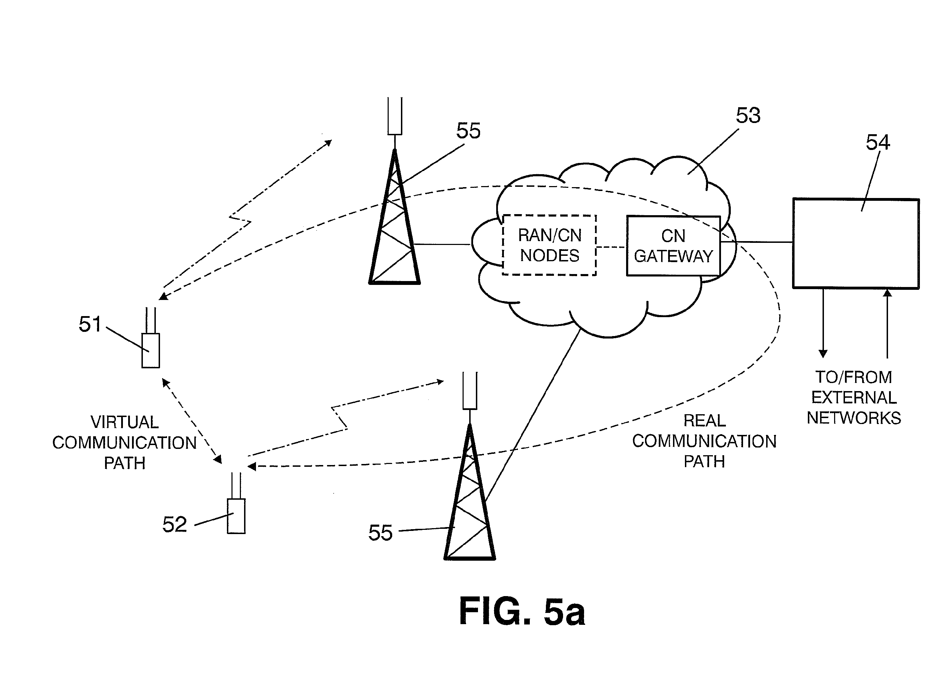

Figure 5a shows an exemplary embodiment for the proposed invention, in a communications scenario where a subscriber's terminal device (51) wants to establish a data/multimedia session with another subscriber (user)'s terminal device (52), both devices being connected to the same DVS node (54) (or pool of DVS nodes) for appropriate virtualization of the device sessions under a given operator through an mobile communications operator access and core network (53). The terminal devices access the network through base stations (55). As part of the normal subscriber interaction, the subscriber will perform an appropriate action in the terminal device (through the screen or any other hardware element) with the desire to establish a connection with the peer user. This interaction is constantly translated to the DVS node by the communications module in the terminal device, and therefore the DVS will understand that the user wants to establish such a connection. As the DVS controls both subscribers, actual connection can be instantaneously performed just by notifying the peer user by means of a suitable indication in its corresponding device session. After proper response from the user the connection is just established between both parties. In a PS data session the connection will be instantaneous as the DVS hosts all data and no real transaction will be required (other than the notifications to the users). In a multimedia session, data will progress between the physical devices and the DVS, with the advantage that all necessary codecs, signalling protocols and applications will run on the DVS, while devices only constitute end-user interfaces that deliver and receive raw data. After the connection has taken place, the user devices will communicate with each other as part of their virtualized sessions without being aware of the actual protocols in use for the connections. Any kind of session can be supported in a transparent way (data, voice, video or audio) without the need to support proprietary OTT applications at the physical devices. The DVS node delivers data to both user devices thus giving the illusion of a real connection between them.

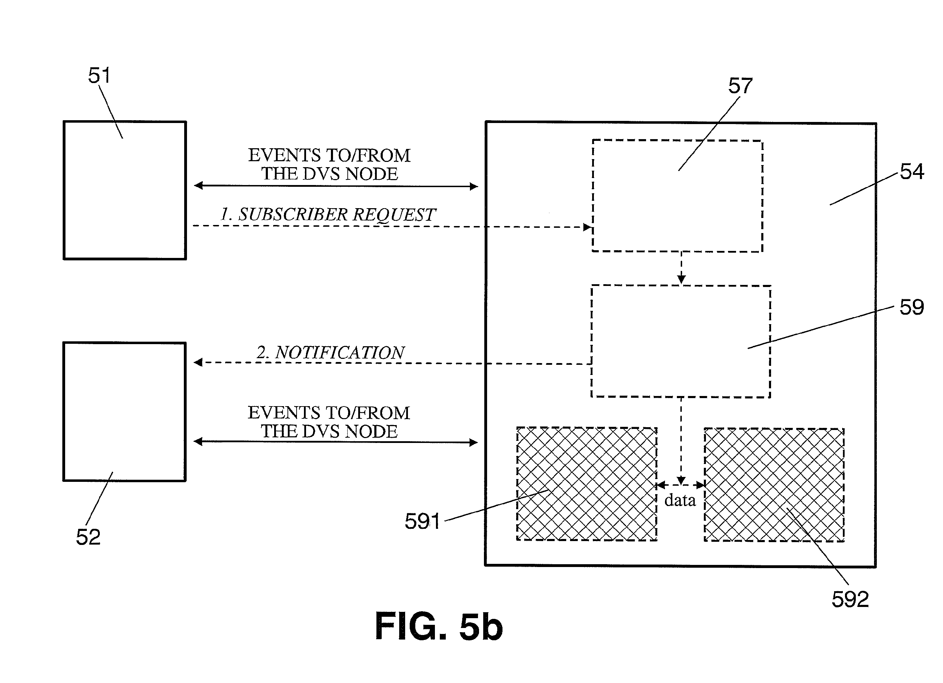

This scheme can extend the traditional capabilities of wireless networks by additionally introducing peer-to-peer data services among users, without the need to pass through an external server. Moreover, the subscriber terminal devices need not remain switched on or under coverage once the communication has started, as the DVS will act as a repository where all user data (as well as session information) can be stored for each subscriber (the DVS will store the peer data and make it available to the subscriber when the device is again switched on or under coverage). In other words, as the peer to peer connections are actually managed by the DVS, the subscriber terminal devices need not be switched on for the connection to take place, albeit they need to be powered on in order to receive the relevant information from the DVS, when appropriate. Additionally, the information transfer will be nearly instantaneous as both virtualized devices are under control of the same DVS node. Therefore only appropriate interactions with the users will be required when requested by the virtualized device session, according to the virtualized application in use. Figure 5b depicts an exemplary sequence of messages that would take place for the embodiment of Figure 5a. As part of the normal user interaction through events to/from the DVS node, the DVS detects the request from subscriber 1 terminal device (51) to establish a connection with the peer user's terminal device (52) (message "Subscriber Request" in the figure). This request is captured by the DVS according to the virtualized device session (e.g. by clicking on an appropriate icon in a virtualized application), whose behaviour is under full control of the DVS. That is, the device does not need to send an explicit request to the DVS. Instead, as part of the user interface (e.g. clicking on an app icon), which is under control of the DVS, the DVS understands (detects) that the intended action is, for example, to establish a connection with another subscriber.

The DVS extracts the necessary information (57) from the user (subscriber) requests (for example, an ID of the target user) and notifies the target user appropriately through an indication in the corresponding virtualized device session (message "Notification"). After response from the peer user, the connection is instantaneously created and no further action is required by the terminal devices other than being persistently connected to the DVS, while the DVS manages data transaction (59) between the corresponding virtualized device sessions (591 and 592) (with the intervention of the terminal devices, through persistent connection with the DVS, if multimedia information flows between them). In PS data transactions, the DVS can make the intended subscriber data accessible to both virtualized device sessions in a nearly instantaneous way, without involving external connections. Other similar signalling sequences can also be defined according to each implementation.

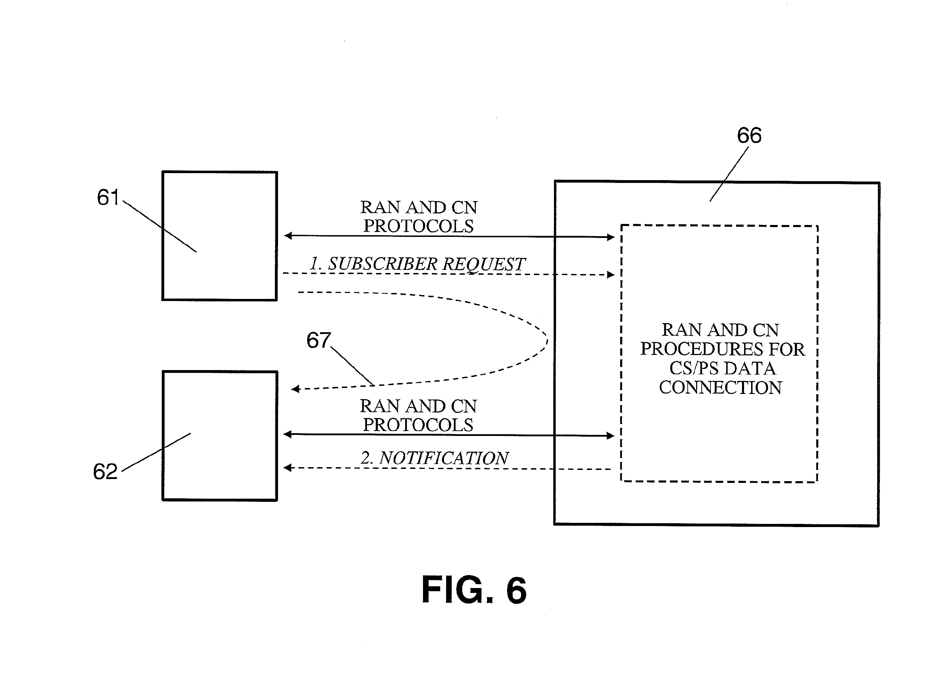

As opposed to this scheme, Figure 6 depicts a traditional signalling scheme according to prior art procedures, where devices take the main role of establishing and maintaining the connections by means of the necessary protocols and/or OTT applications. The network does not control the connection and the terminal devices (61, 62) must support the required protocols and signalling procedures. After a subscriber request (message #1 "Subscriber Request"), which will be based upon RAN and CN protocols, the target terminal device is notified (message #2 "Notification" also based upon RAN and CN protocols) and, if accepted, actual data transaction (67) between the terminal devices takes place between both terminal devices through the radio access and core network (66) following the radio access and core network corresponding procedures for the data transaction. Connections are therefore initiated and terminated at the terminal devices, on contrary to the proposed invention where connections are managed by the DVS.

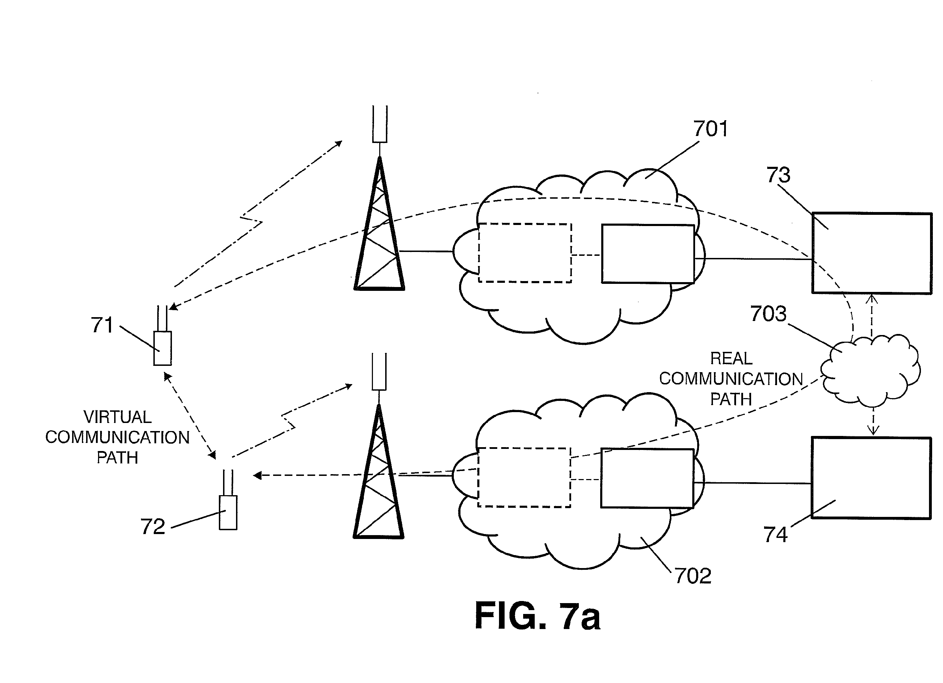

In another communications scenario, depicted in Figure 7a, a subscriber device (71) of a first mobile communications operator wants to establish a data/multimedia session with another subscriber device (72) belonging to a second mobile communications operator. Hence, both terminal devices will be controlled by different DVS nodes (belonging to the first and second operators respectively). Subscriber 1 terminal device (71) will be connected to the first DVS node (73) through the first operator radio access and core network (701) and subscriber 2 terminal device (72) will be connected to the second DVS (74) node through the second operator radio access and core network (702). As part of the normal user interaction, a connection request from subscriber 1 terminal device will be captured (detected) by the DVS node (or pool of DVS nodes) of the first operator, which will in turn connect to the DVS node (or pool of DVS nodes) of the peer device (belonging to the second operator) by establishing a data session through the appropriate protocols and applications (such as TCP/IP, IMS, or an OTT application agreed by the operator to run under control of the DVS). Both DVS nodes will then deliver appropriate data to their corresponding physical devices as part of their virtualized device sessions, thus giving the illusion of a direct connection between the terminal devices (while the real communications path traverse the first operator radio access and core network, the network(s) between both DVSs and the second operator radio access and core network). The connections between the DVS nodes may be based on the Internet (703), or more appropriately on direct interfaces previously agreed and standardized in order to ensure interoperability.

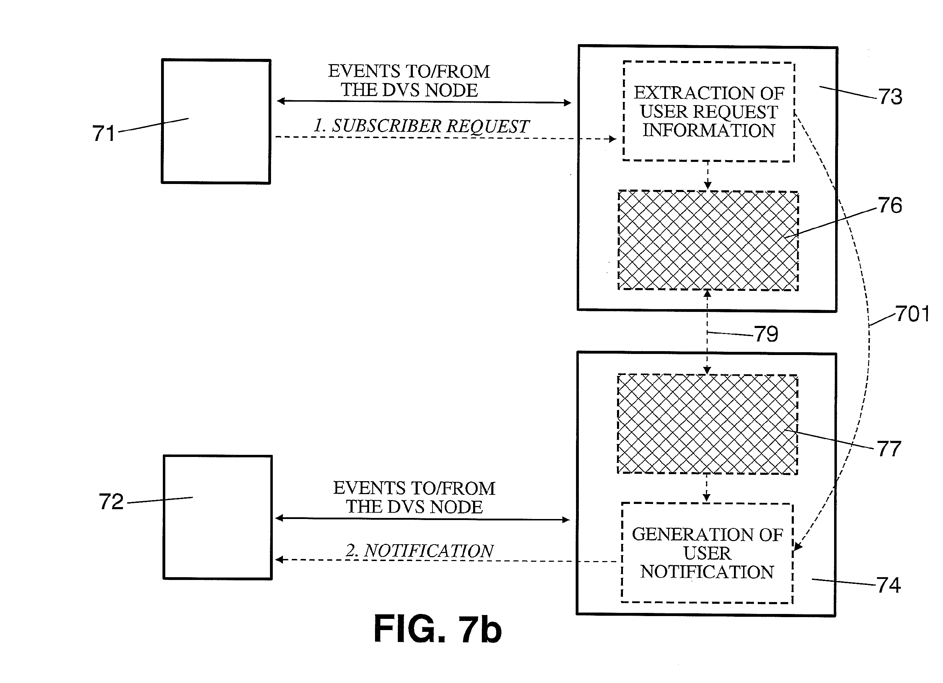

Figure 7b shows the signalling sequence for the above disclosed embodiment. The main change of the signalling sequence between this scenario and the scenario shown in figure 5b is that the virtualized device sessions will be controlled by different DVS nodes (virtualized device session of user 1 (76) will be controlled by the DVS of the first operator network and the virtualized device session of subscriber 2 (77) will be controlled by the DVS of the second operator network) and there will be a connection (79) for data transaction between the DVS nodes that can employ any required suite of protocols or OTT applications. First operator's DVS (DVS A 73) notifies (701) the second operator's DVS (DVS B 74) about the intention to perform a connection, and actual data transaction takes place between the virtualized device sessions (with participation of the physical devices in multimedia transactions), after notification to the target subscriber through the appropriate events to/from DVS B. Prior art-based connections would be based on the same signalling sequence shown in Figure 6.

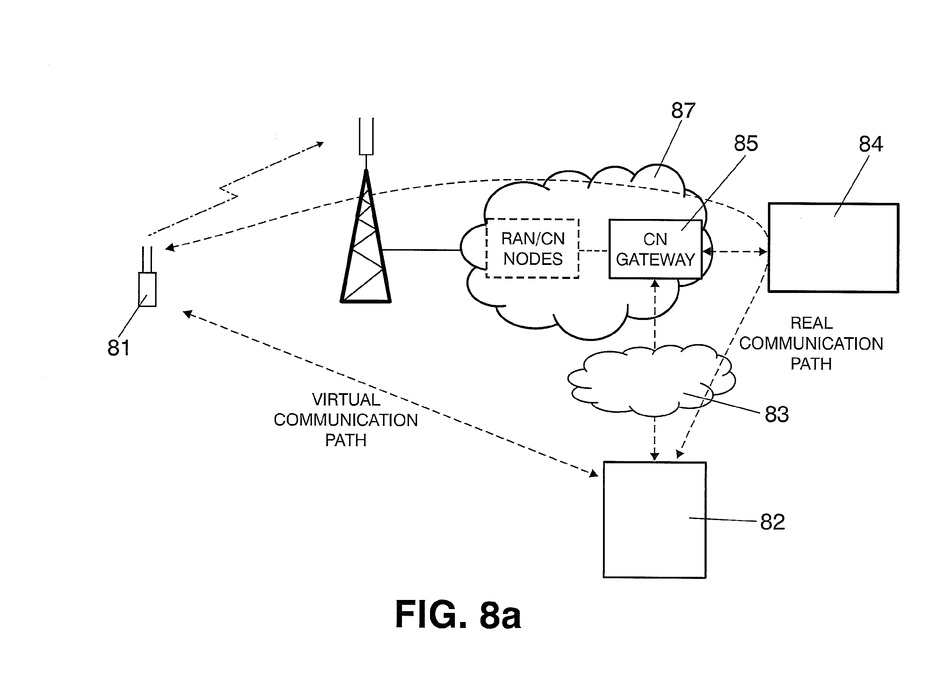

Figure 8a shows another embodiment in a communications scenario where a user terminal device (81) wants to establish a PS data connection with an external server (e.g. a service provider) (82) accessible through the Internet (83) (such as a web service or an Internet-based content provider). The DVS node (84) captures the subscriber request from the events signalling and performs a packet switched (PS) connection with the peer entity through the core network's gateway (85) of the operator's network (such as the GGSN in UMTS, or the PDN-GW in LTE), delivering the received contents to the user device through the appropriate virtualized session. The user gets the impression of being directly connected to the external service provider, while the connection is actually centralized in the DVS thus not depending on device capabilities. The DVS can keep the corresponding connection even if the user switches off the physical device or gets out of coverage (depending on the policy of the service provider), possibly resuming the session later. The CN gateway will also control the charging policy to be applied as in traditional PS connections to the Internet, by connecting to online and/or offline charging servers.

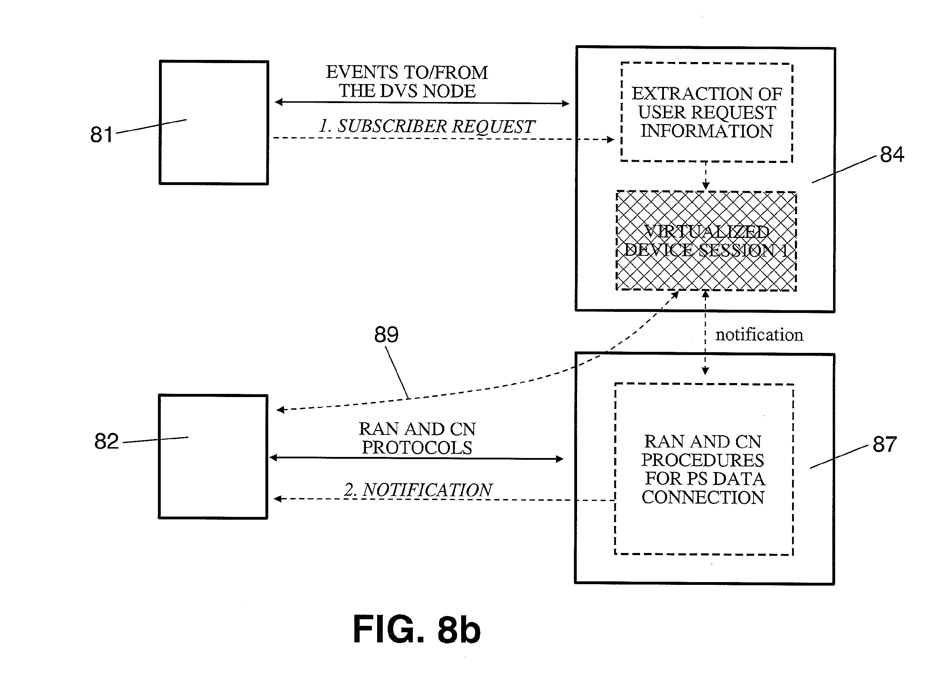

Figure 8b depicts an exemplary signalling sequence for the embodiment in Figure 8a. The DVS node performs a packet switched (PS) connection with the external server in a similar way as in Figure 7a. Only that in this case the data transactions and notification will be made through the operator network (87) using the RAN and CN procedures of the operator's network for PS data connection. The terminal device need only keep suitable persistent connections with the DVS irrespective of the protocols actually in use; in other words, the terminal device only has a connection with the DVS (based on any protocol and data format) and it is the DVS the node which has a PS connection through the operator's network with the service provider. Actual PS data transaction (89) takes place directly between the virtualized device session and the external server. On the contrary, prior art devices would perform the same signalling scheme as in Figure 6 thus requiring support of the appropriate protocols or OTT applications by the terminal device.

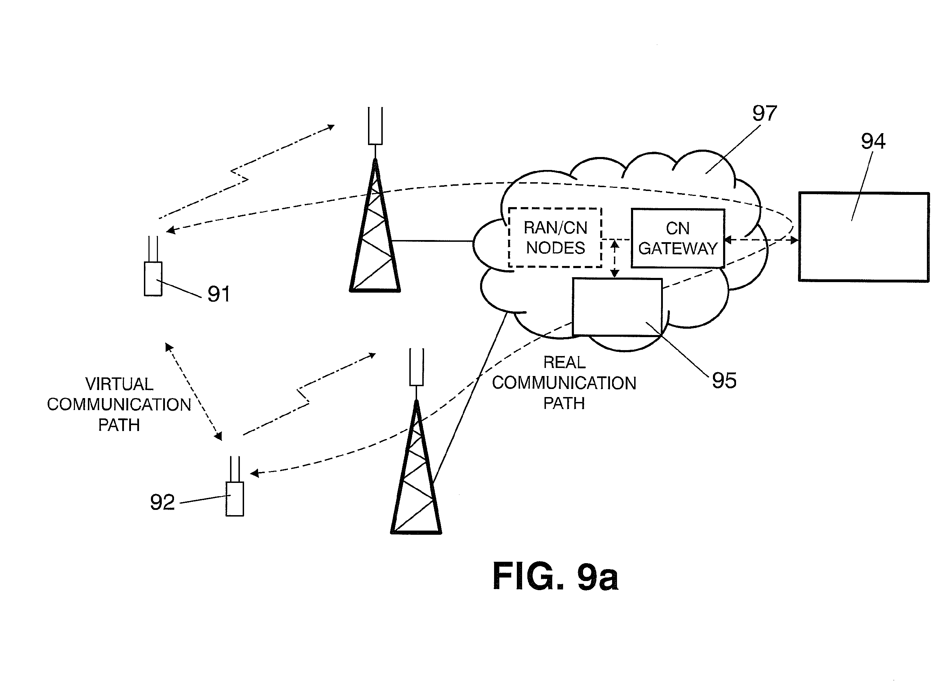

Figure 9a shows yet another embodiment in a communications scenario where a user terminal device (91) wants to establish a voice connection with a legacy terminal device (92) connected to the Circuit Switched (CS) domain of the operator's core network (or the CS domain of another operator's core network). The DVS node (94) establishes a connection with the MSC or Gateway MSC, GMSC, (95) in charge of controlling CS services to/from the peer terminal device, converts the CS voice into suitable audio information according to the format employed for voice sessions, and delivers the audio to the user device through the virtualized session. The DVS thus acts as a CS interface for establishing CS sessions with legacy terminal devices. Any appropriate digital format will be considered suitable for delivering audio information to the subscriber terminal device (91) through the virtualized session, provided that the actual CS connection is managed by the DVS.

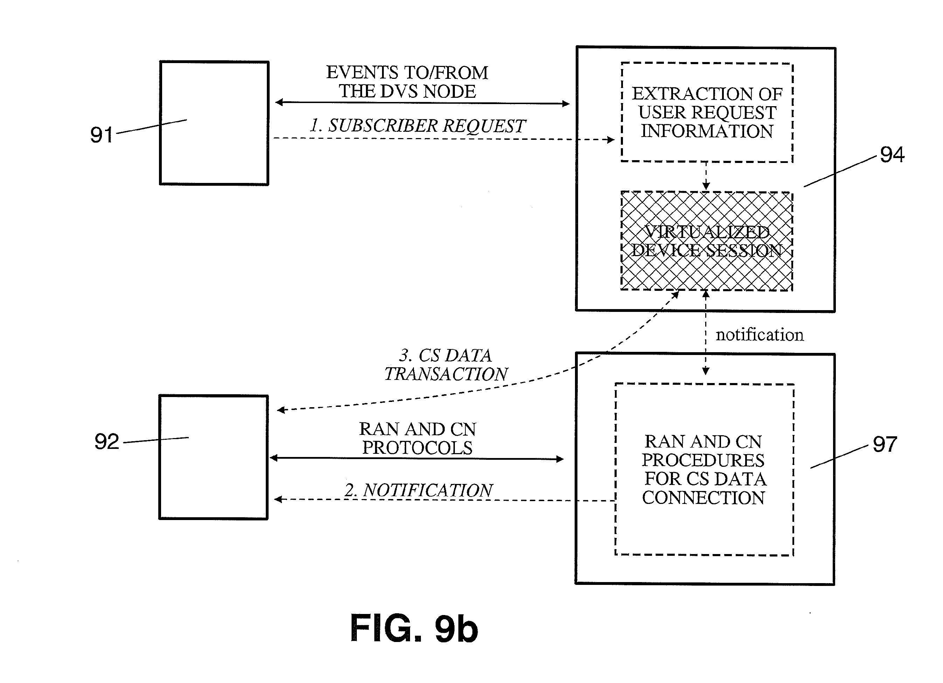

Figure 9b shows the signalling sequence for the embodiment in Figure 9a. The DVS node, after capturing the subscriber connection request from the virtualized device session, establishes a suitable CS connection with the peer terminal device through appropriate signalling with the radio access and core network. The endpoint of the CS connection is in this case the legacy terminal device (92), while the source terminal device (91) is unaware of the type of target terminal device and the actual signalling required. It is essentially the same signalling scheme as in Figure 8b comprising CS data instead of PS data (the communication protocols between the operator's network (97) and the terminal device (92) and the procedures (98) used in the operator's radio access and core network are for CS data connection instead that for PS data connection as in the previous communications scenario). The source terminal device 91 delivers and receives audio information through the persistent connection (this connection between the terminal device 91 with the DVS can be based on any protocol and data format, e.g, it can be a PS connection) with the DVS, which in turn is responsible of establishing the CS connection with the legacy device. Prior art devices would perform the same signalling scheme as in Figure 6 where the terminal devices must support the required protocols and signalling procedures.

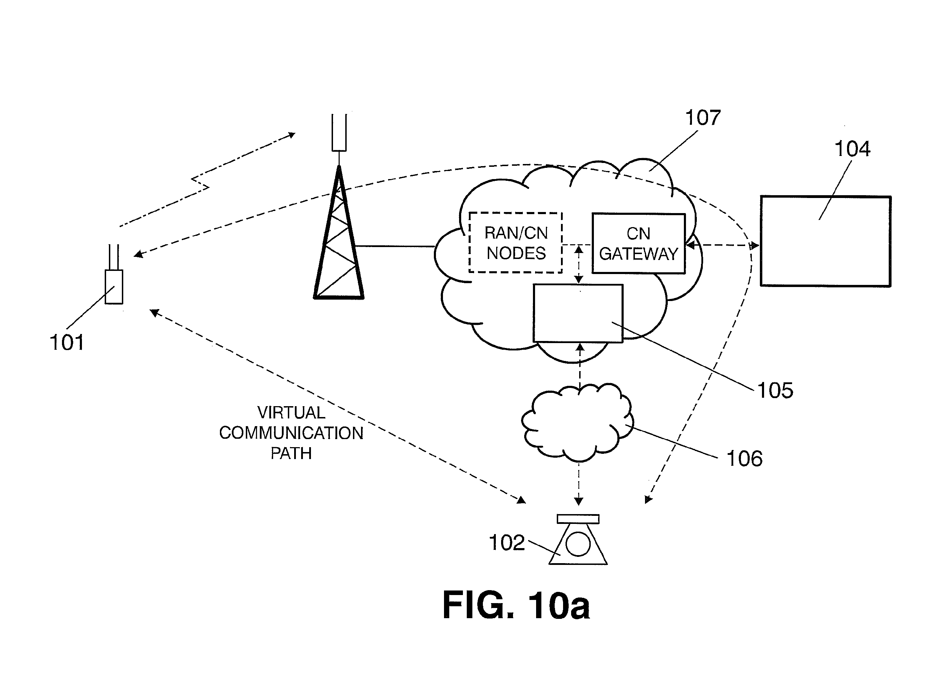

Figure 10a shows yet another embodiment in a communications scenario where a subscriber terminal device (101) wants to establish a voice connection with an external fixed device (102) from a Public Switched Telephone Network (PSTN) or Integrated Services Digital Network (ISDN) (106). The DVS (104) node performs a connection with the GMSC (105) belonging to the operator's network (107), which in turn connects to the external PSTN or ISDN. The DVS again delivers audio data to the subscriber device thus giving the impression that the terminal device is physically connected to the other device as in traditional voice calls.

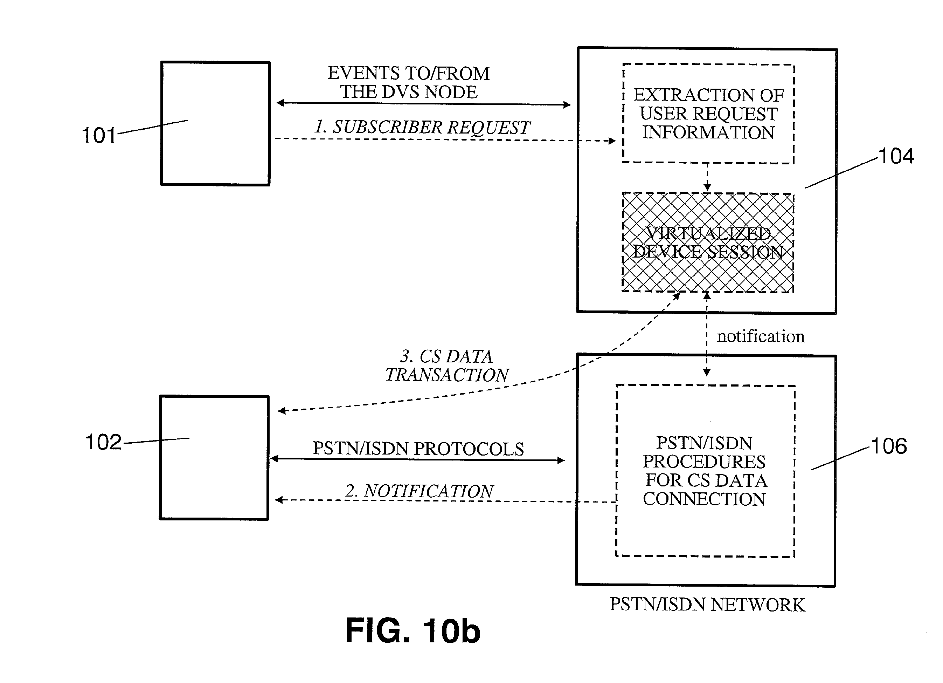

The signalling procedure for this scenario is shown in Figure 10b, which is essentially the same as in Figure 9b just covering the necessary PSTN/ISDN protocols and procedures for connection with the fixed device. Prior art devices would perform the same signalling scheme as in Figure 6.

All these embodiments share the property of hiding the complexity of the connections within the DVS node. The physical devices are always persistently connected to the DVS for subscriber interaction and presentation of the virtualized device sessions to the subscriber. Any interaction through the subscriber interface can trigger appropriate actions at the DVS, such as connecting to a peer entity, a peer device or a different DVS node, but the behaviour of the physical device would be the same irrespective of the type of connection.

Summarizing, the proposed invention introduces a new network node denoted as Device Virtualization Server, as well as a different architecture for terminal devices, which can bring several advantages for the mobile subscriber as well as the operator. The Device Virtualization Server delivers virtualized device sessions to the terminals in a transparent way. By virtualizing the device behaviour and functionalities, as well as the communication sessions, the mobile subscriber can get the impression of a much more capable terminal device than it actually owns. Any compatibility issues between terminal devices disappear as the operator keeps control of the device capabilities and functionalities in a unified way. All applications, data and behaviour can be controlled by the operator's network in a unified way thus benefiting from centralized configuration for all subscribers and automatic updates. The physical device owned by the subscribers can thus be less complex than traditional terminal devices, with a tiny operating system that controls the connectivity and manages the local hardware. This results in significantly lower battery consumption, as the CPU and the OS are usually the most battery-demanding elements in a device. This reduction in CPU complexity can compensate for the stringent connectivity requirements with the Device Virtualization Server.

The Device Virtualization Server also offers the ability to manage all communication sessions in a centralized way. By avoiding the need to support multiple platforms for multimedia, voice and data sessions at the devices, users should not worry about protocols support or installation of multimedia applications, which are usually out of control of the operator. Virtualized sessions can be persistent even if the user switches off the device, thus allowing for new and enhanced communication capabilities as well as device-to-device services without crossing the Internet.

Centralization of the communication tasks between subscribers can also result in significant energy reduction for the operator's network nodes. As the DVS nodes physically host the subscribers' data, any direct communication between virtualized devices will not require actual information transfer (apart from a suitable interaction with the users through the corresponding virtualized sessions). Only when the users do need to download some personal information for easier local access (such as e.g. a personal file), and in order to alleviate the network from costly transactions through the air interface, data can be physically transferred to the user devices. In the common case of multiple virtualized device sessions being hosted by the same DVS node, any transfer of information between them can be avoided resulting in significant energy reduction.

Management of the connections by the DVS nodes alleviates the users from establishing multiple connections with the peer entities, replacing them by a single high-performance connection to the DVS. This brings several advantages, such as avoidance of Internet delay uncertainties in the virtualized sessions, optimization of the TCP receive windows in the user devices, absence of radio interface constraints in the connections between the DVS nodes and the peer entities, and homogeneity of the virtualized sessions' traffic being delivered to the users (which makes radio resource management tasks easier for the base stations). More efficient use of network resources generally results in lower energy consumption of the network nodes, especially in the radio access part where the network is most strained to give the users an acceptable quality of experience.

A person skilled in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
The description and drawings merely illustrate the principles of the invention.
Although the present invention has been described with reference to specific embodiments, it should be understood by those skilled in the art that the foregoing and various other changes, omissions and additions in the form and detail thereof may be made therein without departing from the scope of the invention as defined by the following claims.
Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for virtualization of a terminal device of a subscriber of a mobile communications operator, the method comprising:
- The terminal device connecting to the operator's mobile communications network via a radio access interface to request communication services with peer communication devices;
**characterized in that** the method further comprises the following steps:
- A network node of the operator's mobile communications network, hereinafter referred to as Device Virtualization Server, establishing a connection with the terminal device when said terminal device is switched on;
- The Device Virtualization Server establishing a first communication session with the terminal device using said previously established connection;
- Said Device Virtualization Server detecting all the communication service requests of the terminal device through said first communication session, and when said Device Virtualization Server detects a communication service request of the terminal device, said Device Virtualization Server extracting from the terminal device using said first communication session, information about the requested communication service and the peer communication device with which said communication service is requested to be established;
- Said Device Virtualization Server establishing a communication path with the peer communication device and establishing a second communication session with the peer communication device using said communication path, where the communication protocols and communication procedures used in said second communication session will depend on the type of communication service requested and the type of peer communication device;
- Said Device Virtualization Server establishing a virtual communication session between the terminal device and the peer communication device using the first and second communications sessions.

2. A method according to any of the previous claims where said Device Virtualization Server is connected to a core network gateway node of the operator's mobile communications network located at the interface between the core network of the operator mobile communications network and any other external network.

3. A method according to any of the previous claims where the step of establishing a second communication session with the peer communication device comprises the steps of:
Said Device Virtualization Server notifying the peer communication device about the communication service request of the terminal device, and
If the peer communication device receives and accepts the communication service request, said Device Virtualization Server establishing a second communication session with the peer communication device.

4. A method according to any of the previous claims, where said peer communication device is one of the following: a terminal device belonging to the same operator communication network as the first terminal device, a terminal device belonging to another operator communication network, an external server providing the communication service, a terminal device connected to the Circuit switched domain of a mobile communication network, or a fixed terminal device connected to a Public Switched Telephone network or to an integrated Services Digital Network.

5. A method according to any of the previous claims where the step of said Device Virtualization Server establishing a virtual communication session between the terminal device and the peer communication device using the first and second communication sessions comprises the following steps:
- Said Device Virtualization Server receiving via the first communication session, data from the terminal device for the peer communication device in a first communication format according to the communication protocols used in the first communication session, translating said data to a second communication format according to the communication protocols used in the second communication session and transmitting said data in the second format to the peer communication device via the second communication session.
- Said Device Virtualization Server receiving via the second communication session data from the peer communication device for the terminal device in the second communication format, translating said data to the first communication format and transmitting said data in the first format to the terminal device via the first communication session.

6. A method according to any of the previous claims where said Device Virtualization Server is the termination point for any connection to/from the terminal device of the subscriber.

7. A method according to claim 1 where the Device Virtualization Server establishes the communication path with the peer communication device through a connection with a second Device Virtualization Server to which the peer communication device is connected, in order to establish the virtual communication session between the terminal device and the peer communication device.

8. A method according to claim 1 where the communication service is a packet switched multimedia session, a packet switched data or voice communication or a circuit switched voice or multimedia communication.

9. A method according to claim 1 where the second communication session is one of the following: a Voice over IP connection, a circuit-switched connection through a Mobile Switching Centre, a packet-switched data connection, or a packet switched multimedia connection trough an IP multimedia subsystem.

10. A method according to any of the previous claims where the communications path between said Device Virtualization Server and the peer communications device is made through an external network to which the Device Virtualization Server node is connected.

11. A method according to any of the previous claims where the communication protocols and communication procedures used in the first communication session between the terminal device and said Device Virtualization Server are always the same, irrespective of the communication service requested.

12. A method according to any of the previous claims where the subscriber's terminal device is permanently connected with said Device Virtualization Server as long as the terminal device is powered on and under sufficient coverage, for seamless operation and delivery of the first communication session.

13. A method according to any of the previous claims where the connection between the terminal device and said Device Virtualization Server has the highest priority as supported by the radio access and core networks of the mobile communications network.

14. A network node, hereinafter referred to as Device Virtualization Server, for virtualization of terminal devices of subscribers of a mobile communications operator, wherein said network node comprises:
- A communications module for establishing connections with all the terminal devices when said terminal devices are switched on; for establishing and maintaining independent communications sessions with each terminal device using said previously established connections and for receiving subscriber information from all the subscribers of the mobile communications operator through the established communication sessions.
- Means for, when the network node detects a communication service request from any terminal device, extracting information from the communication service request about the requested communication service and the peer communication device with which said communication service is requested to be established, using said established communication session.
- Means for establishing a communication path with the peer communication device and for establishing a second communication session with the peer communication device using said communication path, where the network node uses in said second communication session the necessary protocols and procedures depending on the type of communication service requested and the type of peer communication device.
- Means for establishing and maintaining a virtual connection between the terminal device and the peer communication device using the communication session established with the terminal device and the second communication session.

15. A data storage medium storing a computer program comprising computer-executable instructions for performing the method according to any of the claims 1-13, when the program is run on a computer.
